# EUROPÄISCHE PATENTSCHRIFT

(11) **EP 1 749 763 B1**
(45) Veröffentlichungstag und Bekanntmachung des Hinweises auf die Patenterteilung: **03.12.2008**
(21) Anmeldenummer: 06013558.9
(22) Anmeldetag: 30.06.2006
(51) Int. Cl.: B65G 13/10, B65G 47/54

(54) **Rollenbahnbahn mit Förderelementen**
Conveyor having flat surfaces on segments of rollers
Convoyeur avec méplat sur des segments de rouleau

(30) Priorität: 02.08.2005 DE 102005036123
(43) Veröffentlichungstag der Anmeldung: 07.02.2007
(73) Patentinhaber: Bosch Rexroth Aktiengesellschaft, 70184 Stuttgart (DE)
(72) Erfinder: Hanauer, Emil, 97355 Rüdenhausen (DE)

(56) Entgegenhaltungen:
- DE-A1- 2 261 781
- DE-A1- 2 429 281
- FR-A- 2 378 701
- US-A- 4 143 755

## Beschreibung

Die Erfindung betrifft eine Rollenbahn mit Förderelementen.

Rollenbahnen, welche zylinderförmige oder scheibenförmige Transportrollen aufweisen, sind aus dem Stand der Technik bekannt. Die DE 1 946 682 zeigt beispielsweise ein neuartiges Antriebskonzept für eine derartige Anordnung. Auch andere Transportmechanismen, wie Fließbänder oder Ausgestaltungsformen mit Transportlinien, sind bekannt. Soll jedoch ein Richtungswechsel des Transportgutes erfolgen, so besteht zum einen das Problem, dass entweder die Reibung zwischen Stückgut und Transportband überwunden werden muss, oder es sind weitaus komplexere und damit aufwendigere Anordnungen erforderlich, welche das Stückgut anheben und auf ein Transportband mit anders orientierter Laufrichtung umsetzen. Zur Realisierung eines solchen Richtungswechsels sind in der Regel stets mehrere Antriebe vonnöten.

In der DE 2 261 781 wird eine Einrichtung zum Verschieben von Stückgütern in zueinander normalen Richtungen offenbart, wobei ein erster Rollgang zum Transport in eine erste Richtung und ein zweiter Rollgang zum Transport in eine zur ersten Richtung senkrechte Richtung vorgesehen ist, wobei der zweite Rollgang mit einer segmentförmigen Ausnehmung versehene Scheiben aufweist, die in den Spalten zwischen Rollen des ersten Rollgangs angeordnet sind. Mittels einer Rotation der Scheiben kann ein anzuhebendes Stückgut in die zweite Richtung transportiert werden. Der Absetzvorgang ist jedoch nicht kontrolliert möglich.

Es ist die Aufgabe der Erfindung eine Lösung vorzuschlagen, welche mit möglichst einfachen Mitteln und mittels eines einzigen Antriebs ansteuerbar ein Stückgut anhebt, abtransportiert und absetzt, wobei eine einfache Integration der Lösung in ein Transportsystem möglich sein soll.

Die Erfindung löst diese Aufgabe durch eine Rollenbahn gemäß Patentanspruch 1.

Ein erstes Förderelement in Verbindung mit der Rollenbahn weist eine Rotationsachse und einen zylinderförmigen oder scheibenförmigen Körper auf, wobei der kreisförmige Querschnitt des Körpers eine umfangseitige Ausnehmung entsprechend eines Kreissegmentes aufweist, wobei das ausgesparte Kreissegment mittels eines Kreisbogens und einer Linie gebildet ist, wobei der Abstand von jedem Punkt der Linie zum Kreismittelpunkt stets kleiner als der Kreisradius ist.

Die Ausnehmung kann entweder die tatsächliche Form eines durch Kreisbogen und Kreissehne begrenzten Kreissegmentes haben oder, falls die Sehne nicht geradlinig und auf kürzestem Weg von einem Kreisumfangspunkt zum anderen Kreisumfangspunkt verlaufen soll, auch die Form beispielsweise eines Kreissektors. Beliebige andere Linienverläufe sind denkbar. Es ist jedoch wesentlich, dass die Linie stets zwischen zwei Kreisumfangspunkten startet und endet. Die beiden Kreisumfangspunkte bilden ein punktförmiges Auflager und im Falle einer Kreissehnen ein linienförmiges Auflager. Zieht man weiter in Betracht, dass das Förderelement auch noch eine Ausdehung in eine dritte Raumachse hat, also eine gewisse Tiefe oder Dicke aufweist, dann entstehen im ersten Falle der beiden Punktlager unter Berücksichtigung der Tiefe zwei linienförmige Lager und im zweiten Falle unter Berücksichtigung der Kreissehne ein vollflächiges Auflager, dessen Breite durch die Länge der Kreissehne und dessen Länge durch die Dicke oder Tiefe des Körpers des Förderelementes definiert ist. Ein solches Förderelement kann mittels eines einzigen Antriebs angetrieben werden.

Ein Stückgut kann somit entweder auf zwei Linien lagern oder auf einer Lagerfläche gelagert werden, wobei aufgrund des Kontaktes zwischen Förderelement und Stückgut eine auf Reibung basierende Haftung realisiert ist. Kommt ein Stückgut auf einer derartigen Anordnung zum Liegen, indem es beispielsweise mittels eines Transportbandes aufgeschoben wird, so kann es bei Drehung des Fördermittels angehoben und damit vom Transportband abgehoben werden. Die Fördermittel sind einfach herzustellen und aufgrund ihres geringen Raumbedarfes jederzeit in ein Transportband integrierbar.

Bevorzugt wird das Förderelement unmittelbar oder mittelbar angetrieben. Unter unmittelbar wird beispielsweise ein Direktantrieb verstanden, welcher direkt auf die Drehachse des Fördermittels einwirkt. Unter mittelbar wird ein indirekter Antrieb verstanden, welcher beispielsweise mittels eines Riemens oder einer Kette auf die Drehachse des Fördermittels einwirkt.

Je nach Anwendungsfall wird bevorzugt das Förderelement aus Metall, Kunststoff, Keramik oder einem Naturstoff hergestellt. Metall hat robuste Eigenschaften bei reduzierter Wartungsanfälligkeit. Kunststoff ist leicht und preiswert herstellbar, Keramik kommt zum Einsatz bei widrigen Umgebungsbedingungen, bei denen Kunststoff oder Metall nicht geeignet ist.

Besonders bevorzugt ist das Förderelement als Zylindersäule realisiert. Es bietet damit eine durchgehende und relativ große Auflagefläche.

Alternativ könnte das Förderelemente zwei identische Förderelemente (Förderrollen/Förderscheiben) umfassen, welche mittels einer starren Achse miteinander verbunden sind und um diese Achse rotieren. Diese Bauform ist empfehlenswert, insbesondere bei Verwendung von Ausgangsmaterialien mit hoher Materialdichte und entsprechendem Gewicht, weil weniger Material benötigt wird als bei einem vollflächigen Zylinder.

Eine erfindungsgemäße Rollenbahn ist mit den zuvor genannten ersten Förderelementen ausgestattet, wobei eine erste und eine zweite Förderelementgruppe umfasst ist, wobei die erste Förderelementgruppe wenigstens ein erstes Förderelement umfasst und die zweite Förderelementgruppe wenigstens ein erstes Förderelement oder eine Förderrolle ohne Ausnehmung umfasst, wobei das oder die Auflager bei Verwendung der erfindungsgemäßen Fördemittel innerhalb dieser Förderelementgruppe gleichartig ausgerichtet sind und wobei die Auflager bei Verwendung der erfindungsgemäßen Fördemittel bezüglich verschiedener Förderelementgruppen unterschiedlich ausgerichtet sind, so dass eine translatorische Bewegung eines zu transportierenden Stückgutes realisierbar ist.

Aufgrund dieser Anordnung könnte mittels eines einzigen Antriebes ein auf dem Auflager liegendes Stückgut angehoben, seitwärts bewegt und anschließend Wieder abgesenkt werden. Will man auf das Absenden verzichten, so genügt es die erste Gruppe mit erfindungsgemäßen Förderelementen auszustatten und die zweite Gruppe mit Förderelementen ohne Ausnehmung (Rollen/Scheiben).

Vorteilhafterweise umfasst eine dritte Förderelementgruppe ein oder mehrere Förderelemente, wobei diese Förderelementgruppe zwischen der ersten und der zweiten Förderelementgruppe angeordnet ist und wobei das oder die Auflager andersartig als in der ersten und der zweiten Förderelementgruppe ausgerichtet ist. Der fließende Übergang zwischen der ersten und der zweiten Fördemittelgruppe wird damit verbessert.

Wenn alle Förderelemente aller Förderelementgruppen eine synchrone Rotationsbewegung ausführen wird der Vorgang reproduzierbar und präzise.

Vorzugsweise erfolgt die synchrone Rotationsbewegung mittels eines einzigen elektrischen Antriebes, könnte aber alternativ auch mittels mehrerer synchron arbeitender elektrischer Antriebe realisiert werden. Bei einem einzigen Antrieb kann die Synchronisation mechanisch und damit preiswert erfolgen. Bei mehreren Antrieben verringert sich die Störanfälligkeit und reduziert sich der Verschleiß.

Erfindungsgemäß umfasst die Rollenbahn einen vorzugsweise auf Federkraft basierenden Niederhalter (ggf. mit Rolle oder sonstigem Gleitmittel), welcher das Stückgut auf die Auflager aufpresst und damit räumlich fixiert. Dies kann derart erweitert werden, dass Rastelemente umfasst sind, welche in das Stückgut einrasten, sobald es seine Zielposition erreicht hat.

Es wird empfohlen, die Rollenbahn in eine Transportvorrichtung, welche ein Transportband oder eine Transportlinie zum An- und/oder Abtransport von Stückgut umfasst, zu integrieren. Vorzugsweise greifen dabei die Rollenbahn und die Transportlinie ineinander, so dass mittels der Rollenbahn ein Stückgut von der Transportlinie anhebbar und abtransportierbar und vorzugsweise absenkbar ist, wobei anschließend eine zur Transportrichtung des Stückgutes bezogene Querbewegung des Stückgutes erfolgt. Damit ist jederzeit auf einfache und preiswerte Weise ein Richtungswechsel des Stückgutes bzw. eine Entnahme des Stückgutes realisierbar.

Die Erfindung wird im Folgenden anhand der in den Figuren dargestellten Ausführungsbeispiele näher erläutert. Es zeigen Figur 1 bis 6 den An- und Abtransport eines Stückgutes mittels einer Transportvorrichtung und im Detail
Figur 1 ein von einer Transportlinie angeliefertes Stückgut,
Figur 2 ein von der Transportlinie abgehobenes Stückgut,
Figur 3 eine von der Transportlinie abtransportiertes Stückgut,
Figur 4 ein von einem Niederhalter erfasstes Stückgut,
Figur 5 ein in seiner neuen Endposition befindliches Stückgut,
Figur 6 ein abgesetztes und mittels Rasten fixiertes Stückgut.

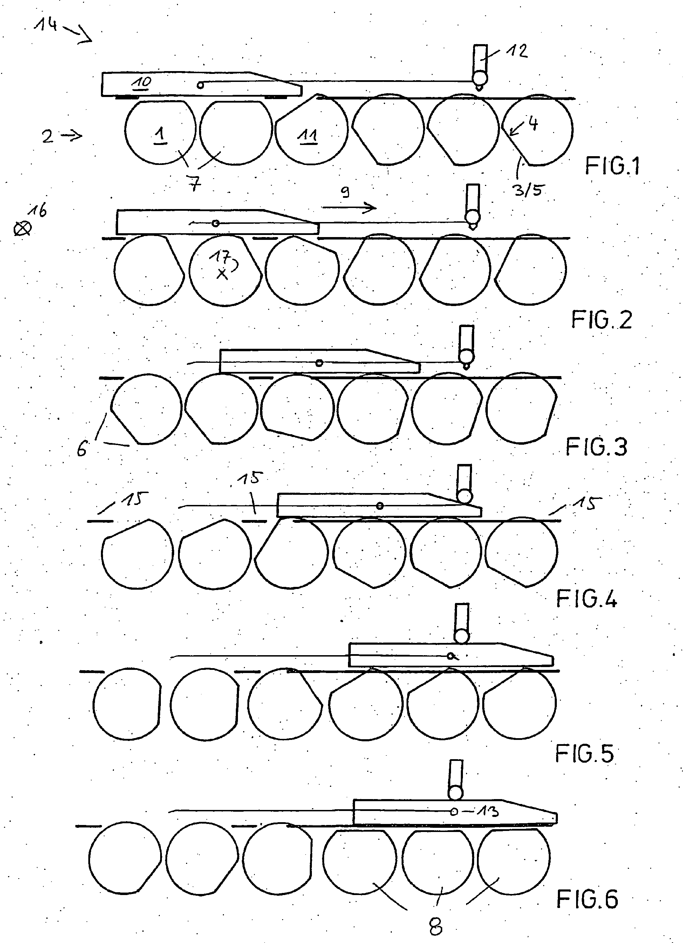

Die in den Figuren 1 bis 6 gezeigten Förderrollen 1 dienen zur Verwendung in Verbindung mit der Rollenbahn 2 als Transportrollen. Die Förderrollen 1 sind um ihre Mittelachse 17 drehbar gelagert und weisen eine zylinderförmige Bauform, das heißt eine Bauform mit kreisförmigem Querschnitt auf Dieser kreisförmige Zylinderquerschnitt weist eine Ausnehmung 3 auf, welche durch einen Kreisbogen (nicht gezeigt) und eine Kreissehne 4 begrenzt ist und sich auf ganzer Rollenlänge gleichartig erstreckt. Die Kreissehne 4 bildet unter Berücksichtigung der Körperlänge eine Auflagefläche 5 (Nur Vorderansicht gezeigt), deren Breite durch die Länge der Kreissehne und die Länge des Körpers definiert ist. Die Rollen 1 können entweder unmittelbar (direkt) oder mittelbar (Übersetzung, Riemen, Ketten, etc.) angetrieben werden.

Die Rollenkörper 1 können sich entweder als Voll- oder Hohlzylinder über die gesamte Breite der Rollenbahn 2 erstrecken oder mittels einer Drehachse mit mehreren gleichartigen Rollen 1 starr verbunden sein.

Die in den Figuren 1 bis 6 gezeigte Rollenbahn 2 mit Förderelementen 1 zeigt mehrere Rollengruppen 7, 11, 8, um ein Stückgut 10 zu transportieren. Die erste Rollengruppe 7 umfasst zwei Rollen 1 mit Abflachungen 3 und die zweite Rollengruppe 8 umfasst drei Rollen 1 mit Abflachungen 3. Diese Anordnung würde bereits genügen, um ein Stückgut 10 von einer Transportlinie 15 anzuheben und abzutransportieren (Fig. 1 bis 4). Hierzu könnte sogar auf die Abflachungen 3 an den Rollen 1 der zweiten Rollengruppe 8 verzichtet werden. Allerdings wäre dann ein Absetzen des Stückgutes 10 nicht mehr möglich, hierzu sind die Abflachungen 3 in den Rollen der zweiten Rollengruppe unabdingbar. Damit der Vorgang des Anhebens und Absetzens funktioniert, ist die räumliche Orientierung der Abflachung 3 innerhalb Rollengruppe 7 gleichartig auszurichten, wobei die Abflachungen (Auflager) 3 bezüglich verschiedener Förderelementgruppen 7, 8 passend ausgerichtet sein müssen und zwar so dass die gewünschte gleitende und möglichst ruckfreie Bewegung eines zu transportierenden Stückgutes 10 realisiert wird.

Um den Stückgutübergang zwischen den beiden Rollengruppen 7 und 8 zu verbessern ist es empfehlenswert, eine dritte Rollengruppe 11 mit einer oder mehreren Rollen 1 zu verwenden, wobei das oder die Auflager 3 ebenfalls entsprechend der gewünschten Bewegung zu der ersten und der zweiten Rollengruppe 7, 8 ausgerichtet sein muss. In der dritten Rollengruppe 11 wären auch Rollen ohne Abflachung 5 verwendbar.

Alle Rollen 1 führen unabhängig von der Rollengruppe 7, 8, 11, der sie zugeordnet sind, eine synchrone Rotationsbewegung aus. Die synchrone Rotationsbewegung kann mittels eines einzigen elektrischen Antriebes oder mittels mehrerer synchron arbeitender elektrischer Antriebe realisiert werden. Die mittlere Rollengruppe 11 kann aber auch schneller laufen und das Stückgut 10 streckenweise über Reibung beschleunigen oder abbremsen. Unterschiedliche Geschwindigkeiten können durch unterschiedliche Drehradien oder Drehzahlen, Übersetzungen oder sonstige mechanische Kopplungen erzeugt werden.

Der Niederhalter 12 presst das Stückgut 10 in der gewünschten Endposition auf die Auflager 3, erhöht damit die Reibung und fixiert das Stückgut 10 somit in der vertikalen Ebene. Die Rastelemente 13 bewirken eine Arretierung des Stückgutes 10 in der horizontalen Ebene.

Die in den Figuren 1 bis 6 gezeigte Transportvorrichtung 14 umfasst eine Rollenbahn 2 und eine Transportlinie 15 zum An- und/oder Abtransport des Stückgutes 10. Die Rollenbahn 2 und die Transportlinie 15 greifen derart ineinander, dass mittels der Rollenbahn 2 ein Stückgut 10 von der Transportlinie 15 mit Transportrichtung 16 anhebbar und abtransportierbar ist, wobei eine zur Transportrichtung 16 des Stückgutes 10 bezogene Querbewegung 9 des Stückgutes 10 erfolgt, um dieses entfernt von der Transportlinie 15 mittels der zweiten Gruppe 8 der Rollenbahn 2 abzulegen.

Die An- bzw. Abtransportphase gestaltet sich wie folgt:

In einem ersten Schritt (Fig. 1) wird das auf einer Transportlinie 15 aufliegende Stückgut 10 von dieser Transportlinie 15 aus einer bestimmten Vorzugsrichtung 16 angeliefert. Die Transportlinie 15 stoppt und das Stückgut 10 verharrt in seiner Lage über den Abflachungen der Rollen 1 der ersten Rollengruppe 7. Alle Rollen 1 der Rollenbahn 9 beginnen sich synchron zu drehen. Es wäre auch denkbar den Hubvorgang während der Bewegung der Transportlinie 15 durchzuführen.

Im zweiten Schritt (Fig. 2) heben die Rollen 1 der ersten Rollengruppe 7 das Stückgut aufgrund ihrer besonderen Form von der Transportlinie 15 ab, so dass dieses über der Transportlinie 15 angeordnet ist und in die ursprüngliche Transportrichtung 16 zumindest von dieser Transportlinie nicht mehr weitertransportiert wird.

In einem dritten Schritt (Fig. 3) bewirken die rotierenden Rollen 1 eine Seitwärtsbewegung des Stückgutes quer zur Transportrichtung 16 der Transportlinie 15 in eine Vorzugsrichtung 9. Alle Abflachungen 3 weisen nun von der Unterseite des Stückgutes 10 weg, wodurch das Stückgut 10 relativ geradlinig und ohne Erschütterungen eine translatorische Seitwärtsbewegung ausführen kann.

In einem vierten Schritt (Fig. 4) bewegt sich das Stückgut 10 weiter seitwärts, wobei es mittels des Niederhalters 12 im wesentlichen auf die Rollen 1 der zweiten Rollengruppe 8 gepresst wird.

In einem fünften Schritt (Fig. 5) sind die Abflachungen 3 der zweiten Rollengruppe 8 in Richtung der Unterseite des Stückgutes 10 ausgerichtet, wobei die horizontale Lage des Stückgutes 10 noch unverändert ist, d.h. es ist nach wie vor in unveränderter Höhenlage über der Transportlinie 15 angeordnet und damit besteht kein Kontakt zu der Transportlinie 15.

In einem sechsten und letzten Schritt (Fig. 6) sorgt die kontinuierliche Drehung der Rollen 1 der zweiten Rollengruppe 8 für ein Absetzen des Stückgutes 10 auf der Auflagefläche 5 der Rollen 1 der zweiten Gruppe bzw. auf einer anderen Unterlage zur weiteren Bearbeitung. Die Unterlage kann aus einer weiteren Transportlinie 15 o. ä. bestehen, welches das Stückgut nun in eine neue Richtung 9 abtransportiert. Das Stückgut 10 könnte auf diese Art und Weise ebenso auf einer Palette abgesetzt und anschließend abtransportiert werden..

Die Höhe, um die das Stückgut in vertikaler Ebene bewegt werden kann, errechnet sich aus dem Rollenradius abzüglich des radialen Abstandes zwischen Kreissehne und Kreismittelpunkt. Je nach Ausführung der segmentförmigen Ausnehmungen sind damit unterschiedliche Höhen überwindbar.

### Bezugszeichenliste

- 1: Fördermittel
- 2: Rollenbahn
- 3: Abflachung
- 4: Kreissehne
- 5: Auflagefläche
- 6: Kreisumfangspunkte
- 7: 1. Fördermittelgruppe
- 8: 2. Fördermittelgruppe
- 9: Quertransportrichtung
- 10: Stückgut
- 11: 3. Fördermittelgruppe
- 12: Niederhalterfeder (gleitend oder mit Rolle)
- 13: Raste
- 14: Transportvorrichtung
- 15: Transportlinie, Transportband, o.ä.
- 16: Transportrichtung
- 17: Mittelachse

## Patentansprüche

1. Rollenbahn (2) mit Förderelementen (1), wobei eine erste Förderelementgruppe (7) wenigstens ein erstes Förderelement (1) umfasst, wobei das erste Förderelement (1) eine Rotationsachse (17) und einen zylinderförmigen oder scheibenförmigen Körper aufweist, wobei der kreisförmige Querschnitt des Körpers eine umfangsseitige Ausnehmung (3) entsprechend eines Kreissegmentes aufweist, wobei das ausgesparte Kreissegment mittels eines Kreisbogens und einer Linie gebildet ist, wobei der Abstand von jedem Punkt der Linie zum Kreismittelpunkt stets kleiner als der Kreisradius ist,
und eine zweite Förderelementgruppe (8) erste Förderelemente (1) und/oder förderelemente ohne Ausnehmung umfasst, wobei Auflager (3) innerhalb dieser Förderelementgruppe (8) gleichartig ausgerichtet sind und wobei Auflager (3) innerhalb einer Förderelementgruppe (7, 8) derart ausgerichtet sind, dass eine translatorische Bewegung (9) eines zu transportierenden Stückgutes (10) realisierbar ist,
wobei die Rollenbahn (2) einen vorzugsweise auf Federkraft basierenden Niederhalter (12) umfasst.

2. Rollenbahn (2) nach Anspruch 1, **dadurch gekennzeichnet, dass** eine dritte Förderelementgruppe (11) mit einem oder mehreren Förderelementen (1) umfasst ist, wobei diese Förderelementgruppe (11) zwischen der ersten (7) und der zweiten (8) Förderelementgruppe angeordnet ist.

3. Rollenbahn (2) nach Anspruch 1 oder 2, **dadurch gekennzeichnet, dass** alle Förderelemente (1) aller Förderelementgruppen (7, 8, 11) eine synchrone Rotationsbewegung ausführen.

4. Rollenbahn (2) nach einem der Ansprüche 1 bis 3, **dadurch gekennzeichnet, dass** die synchrone Rotationsbewegung mittels eines einzigen elektrischen Antriebes oder mittels mehrerer synchron arbeitender elektrischer Antriebe realisiert ist.

5. Rollenbahn (2) nach einem der Ansprüche 1 bis 4, **dadurch gekennzeichnet, dass** diese Rastelemente (13) umfasst.

6. Rollenbahn nach einem der vorstehenden Ansprüche, wobei das erste Förderelement (1) so ausgebildet ist, dass ein Auflager (5) mit zumindest zwei Lagerpunkten (6) entsteht, wobei die Breite des Auflagers der Länge der Kreissehne (4) und die Länge des Auflagers der Körperlänge entspricht.

7. Rollenbahn nach einem der vorstehenden Anspruche, wobei das erste Förderelement (1) unmittelbar oder mittelbar angetrieben ist.

8. Rollenbahn nach einem der vorstehenden Ansprüche, wobei das erste Förderelement (1) aus Metall oder Kunststoff oder Keramik oder einem Naturstoff hergestellt ist.

9. Rollenbahn nach einem der vorstehenden Ansprüche, wobei zwei scheibenförmige erste Förderelemente (1) mittels einer starren Achse miteinander verbunden sind.

10. Transportvorrichtung (14) umfassend eine Rollenbahn (2) nach einem der Ansprüche 1 bis 9 und eine Transportlinie (15) oder mehrere Transportlinien (15) zum An- und/oder Abtransport von Stückgut (10).

11. Transportvorrichtung (14) nach Anspruch 10, wobei die Rollenbahn (2) und die Transportlinie (15) ineinander greifend realisiert sind, so dass mittels der Rollenbahn (2) ein Stückgut (10) von der Transportlinie (15) anhebbar und abtransportierbar und vorzugsweise absenkbar ist, wobei eine zur Transportrichtung (16) des Stückgutes (10) bezogene Querbewegung (9) des Stückgutes (10) erfolgt.

## Claims

1. Roller conveyor (2) having conveying elements (1), it being the case that a first conveying-element group (7) comprises at least one first conveying element (1), the first conveying element (1) has an axis of rotation (17) and a cylindrical or disc-like body, that the circular cross-section of the body has a circumferential recess (3) corresponding to a segment of a circle, that the recessed circle segment is formed by means of an arc of a circle and a line, and that the distance between each point of the line and the centre point of the circle is always smaller than the radius of the circle,
and a second conveying-element group (8) comprises first conveying elements (1) and/or conveying elements without a recess, it being the case that bearing means (3) within this conveying-element group (8) are oriented in the same way, and that bearing means (3) within a conveying-element group (7, 8) are oriented such that it is possible to realize a translatory movement (9) for an article (10) which is to be transported,
the roller conveyor (2) comprising a holding-down means (12) preferably based on the spring force.

2. Roller conveyor (2) according to Claim 1, **characterized in that** a third conveying-element group (11) is provided with one or more conveying elements (1), this conveying-element group (11) being arranged between the first (7) and the second (8) conveying-element groups.

3. Roller conveyor (2) according to Claim 1 or 2, **characterized in that** all the conveying elements (1) of all the conveying-element groups (7, 8, 11) execute a synchronous rotary movement.

4. Roller conveyor (2) according to one of Claims 1 to 3, **characterized in that** the synchronous rotary movement is realized by means of a single electric drive or by means of a plurality of synchronously operating electric drives.

5. Roller conveyor (2) according to one of Claims 1 to 4, **characterized in that** it comprises latching elements (13).

6. Roller conveyor according to one of the preceding claims, it being the case that the first conveying element (1) is designed so as to form a bearing means (5) with at least two bearing points (6), the width of the bearing means corresponding to the length of the chord (4) of the circle and the length of the bearing means corresponding to the length of the body.

7. Roller conveyor according to one of the preceding claims, it being the case that the first conveying element (1) is driven directly or indirectly.

8. Roller conveyor according to one of the preceding claims, it being the case that the first conveying element (1) is produced from metal or plastic or ceramic material or a natural material.

9. Roller conveyor according to one of the preceding claims, it being the case that two disc-like first conveying elements (1) are connected to one another by means of a rigid axial member.

10. Transporting apparatus (14) comprising a roller conveyor (2) according to one of Claims 1 to 9 and one or more transporting lines (15) for the incoming and/or outgoing transporting of articles (10).

11. Transporting apparatus (14) according to Claim 10, it being the case that the roller conveyor (2) and the transporting line (15) are realized to engage one inside the other, in which case, by means of the roller conveyor (2), an article (10) can be raised from the transporting line (15) and transported away and preferably lowered, the article (10) undergoing a transverse movement (9) in relation to the transporting direction (16) of the article (10).

## Revendications

1. Convoyeur à rouleaux (2) comportant des éléments de transfert (1),
au moins un premier groupe d'éléments de transfert (7) comportant au moins un premier élément de transfert (1),
le premier élément de transfert (1) ayant un axe de rotation (17) et un corps en forme de cylindre ou de disque,
la section de forme circulaire du corps ayant un dégagement (3) sur le côté périphérique correspondant à un segment de cercle,
le segment de cercle, dégagé étant formé d'un arc de cercle et d'une ligne,
la distance de chaque point de la ligne par rapport au centre du cercle étant toujours inférieure au rayon du cercle et un second groupe d'éléments de transfert (8) comprend des premiers éléments de transfert (1) et/ou des éléments de transfert sans dégagement,
des appuis (3) étant alignés de la même manière à l'intérieur de ce groupe d'élément de transfert (8), et
les appuis (3) à l'intérieur d'un groupe d'éléments de transfert (7, 8) étant alignés pour réaliser un mouvement de translation (9) d'un produit (10) à transporter,
le convoyeur à rouleaux (2) ayant un serre-flan (12) utilisant de préférence une force de ressort.

2. Convoyeur à rouleaux (2) selon la revendication 1,
**caractérisé en ce qu'**
un troisième groupe d'éléments de transfert (11) comprend un ou plusieurs éléments de transfert (1),
ce groupe d'éléments de transfert (11) étant installé entre le premier groupe d'éléments de transfert (7) et le second groupe d'éléments de transfert (8).

3. Convoyeur à rouleaux (2) selon la revendication 1 ou 2,
**caractérisé en ce que**
tous les éléments de transfert (1) de tous les groupes d'éléments de transfert (7, 8, 11) effectuent un mouvement de rotation synchrone.

4. Convoyeur à rouleaux (2) selon les revendications 1 à 3,
**caractérisé en ce que**
le mouvement de rotation synchrone est réalisé par un unique moyen d'entraînement électrique ou par plusieurs moyens d'entraînement électriques fonctionnant en synchronisme.

5. Convoyeur à rouleaux (2) selon les revendications 1 à 4,
**caractérisé en ce qu'**
il comprend des éléments d'accrochage (13).

6. Convoyeur à rouleaux (2) selon les revendications précédentes, selon lequel
le premier élément de transfert (1) est réalisé pour former un appui (5) avec au moins deux points d'appui (6),
la largeur de l'appui correspond à la longueur des cordes (4) et la longueur de l'appui correspond à la grandeur du corps.

7. Convoyeur à rouleaux (2) selon les revendications précédentes, selon lequel
le premier élément de transfert (1) est entraîné directement ou indirectement.

8. Convoyeur à rouleaux (2) selon les revendications précédentes, selon lequel
le premier élément de transfert (1) est réalisé en métal ou en matière plastique ou en céramique ou en une matière naturelle.

9. Convoyeur à rouleaux (2) selon les revendications précédentes, selon lequel
deux premiers éléments de transfert (1) en forme de disque sont reliés par un axe rigide.

10. Dispositif de transport (14) comportant un convoyeur à rouleaux (2) selon les revendications 1 à 9, et une ligne de transport (15) ou plusieurs lignes de transport (15) pour l'entraînement en entrée et/ou en sortie de produits en morceaux (10).

11. Dispositif de transport (14) selon la revendication 10, selon lequel
le convoyeur à rouleaux (2) et la ligne de transport (15) sont réalisés de façon à s'interpénétrer pour que le convoyeur à rouleaux (2) permette de soulever une pièce (10) de la ligne de transport (15) et l'évacuer et de préférence de s'abaisser,
produisant ainsi un mouvement transversal (9) de la pièce (10) par rapport à la direction de transport (16) de la pièce (10).
